(19)

Europäisches
Patentamt
European
Patent Office
Office européen
des brevets

(11) **EP 3 862 082 A1**

(12) **EUROPEAN PATENT APPLICATION**
published in accordance with Art. 153(4) EPC

(43) Date of publication:
**11.08.2021 Bulletin 2021/32**

(21) Application number: **18940476.7**

(22) Date of filing: **15.11.2018**

(51) Int Cl.:
*B01J 29/89* (2006.01)          *C01B 39/08* (2006.01)

(86) International application number:
**PCT/CN2018/115720**

(87) International publication number:
**WO 2020/097877 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dalian Institute Of Chemical Physics, Chinese Academy Of Sciences**
**Liaoning 116023 (CN)**

(72) Inventors:
• YUAN, Danhua
  Dalian City, Liaoning 116023 (CN)
• XING, Jiacheng
  Dalian City, Liaoning 116023 (CN)
• XU, Yunpeng
  Dalian City, Liaoning 116023 (CN)
• LIU, Zhongmin
  Dalian City, Liaoning 116023 (CN)

(74) Representative: **Ter Meer Steinmeister & Partner**
**Patentanwälte mbB**
**Nymphenburger Straße 4**
**80335 München (DE)**

(54) **METHOD FOR PREPARING HIERARCHICAL POROUS TITANOSILICATE TS-1 MOLECULAR SIEVE**

(57)     The present application discloses a method for preparing hierarchical porous titanium-silicon TS-1 molecular sieve, wherein a titanate polyester polyol is used as titanium source. In the method, titanium is connected to a polymer, which makes titanium more difficult to hydrolyze, prevent the $TiO_2$ precipitation and reduce the formation of non-framework titanium. In addition that such new type of the titanate polyester polyol acts as the titanium source during the synthesis process, the titanate polyester polyol can also be used as mesoporous template. Therefore, the TS-1 molecular sieve obtained by this method has mesoporous structure, which plays an important role in promoting the application of TS-1 molecular sieve in the field of catalysis.

Figure 1

EP 3 862 082 A1

## Description

### FIELD

The present application relates to a method for preparing hierarchical porous titanium-silicon TS-1 molecular sieve, which belongs to the field of preparation of molecular sieve.

### BACKGROUND

TS-1 molecular sieve is a kind of microporous molecular sieve with MFI topological structure. Due to the presence of tetrahedral $Ti^{4+}$ sites in its framework structure, it has a good catalytic effect on the selective oxidation of organics in the presence of $H_2O_2$, such as the epoxidation of olefins, the hydroxylation of phenol, the ammoximation of ketones, the oxidation of alkanes and other selective oxidation reactions. The catalytic oxidation process with TS-1 molecular sieve is pollution-free and the reaction conditions are mild, which overcomes the disadvantages of serious pollution and lengthy reaction process in the traditional process.

There are two main factors affecting the activity and stability of TS-1 molecular sieve: one is the content of framework titanium and non-framework titanium in the molecular sieve, and the other is the diffusion performance of the molecular sieve. For the former factor, due to the large radius of titanium atom, it is difficult to enter the MFI framework, and further the titanium source is easily hydrolyzed and polymerized to form titanium dioxide precipitate. Thus, it is difficult to avoid the formation of six-coordinated non-framework titanium in the synthesis of TS-1 molecular sieve. However, the existence of the non-framework titanium can promote the ineffective decomposition of $H_2O_2$ and is not conducive to the oxidation reaction catalyzed by TS-1 molecular sieve. For the latter factor, the pore size of TS-1 molecular sieve is too small which refers to only 0.55nm, which greatly limits the transmission and diffusion of the organic macromolecules in the catalyst and thus inhibits the reaction activity and service life of the catalyst.

The synthesis of TS-1 was originally reported by Taramasso et al. (US4410501). The synthesis of TS-1 used tetraethyl orthosilicate (TEOS) as silicon source, tetraethyl titanate (TEOT) as titanium source, and tetrapropylammonium hydroxide (TPAOH) as template which were subject to hydrothermal crystallization at a temperature ranging from 130 to 200°C in a reactor for a time ranging from 6 to 30 days. However, this method is cumbersome to operate, difficult to control conditions, and has poor experimental repeatability. In addition, due to the difference in the hydrolysis rates of the titanium source, a large amount of non-framework titanium is formed, which affects the catalytic performance of TS-1 molecular sieve. Subsequently, Thangaraj et al. (zeolite, 12(1992), 943) pre-hydrolyzed tetraethyl orthosilicate in TPAOH aqueous solution, and then slowly added therein isopropanol solution of tetrabutyl titanate with a slower hydrolysis rate under vigorous stirring conditions. And, TS-1 molecular sieve with less non-framework titanium was obtained. These improvements are mainly to control the hydrolysis process of the titanium source, so that the hydrolysis rates of the titanium source are more matched to inhibit the formation of non-framework titanium, thereby increasing the framework titanium content in the TS-1 molecular sieve.

For the diffusion problem of TS-1 molecular sieve, it is a common solution to introduce mesopores into the zeolite molecular sieve system to prepare the hierarchical porous molecular sieves. Due to the existence of hierarchical pores, the communication and diffusion performances of the catalyst material are greatly improved, thereby effectively enhancing the interaction between the guest molecules and the active sites. It is currently the most effective way to prepare hierarchical porous molecular sieves by using template agents to construct mesoporous or macroporous structures in molecular sieve materials, including soft template method and hard template method. The soft template method is exemplified by Zhou Xinggui et al. (CN103357432A) and Zhang Shufen (CN102910643A), wherein Zhou Xinggui et al. (CN103357432A) uses polyether Pluronic F127 as the mesoporous template to synthesize mesoporous nano-TS-1 molecular sieve by dry gel method; and Zhang Shufen (CN102910643A) uses cetyltrimethylammonium bromide as mesoporous template to introduce mesoporous channels into the titanium silicate molecular sieve. The hard template method is exemplified by Chen Lihua et al. (CN104058423A) and Li Gang et al. (CN101962195A), wherein Chen Lihua et al. (CN104058423A) uses three-dimensional ordered macroporous-mesoporous hierarchical porous carbon material as the hard template to limit the growth of TS-1 nanocrystals in the three-dimensional ordered channels, and then removes the hard template to obtain hierarchical porous titanium-silicon TS-1 molecular sieve; and Li Gang et al. (CN101962195A) uses cheap sugar instead of porous carbon materials as macroporous-mesoporous template agent, which is heated, carbonized and dehydrated to directly form hard template in the process of heat treatment of the TS-1 molecular sieve synthetic gel containing sugar to prepare dry gel, to obtain hierarchical porous TS-1 molecular sieve.

### SUMMARY

According to one aspect of the present application, a method for preparing a TS-1 molecular sieve is provided. In the method, titanate polyester polyol is formed by connecting titanium source to a polymer, which makes titanium more difficult to hydrolyze, prevent the $TiO_2$ precipitation and reduce the formation of non-framework titanium. In addition that such new type of titanate polyester polyol acts as the titanium source during the synthesis process, the titanate polyester polyol can also be used as mesoporous template. Therefore, the TS-1 molecular sieve obtained by this method has a mesoporous structure, which plays an important role in promoting the application of TS-1 molecular sieve in the field of catalysis.

The method for preparing the hierarchical porous TS-1 molecular sieve is characterized in that the titanate polyester polyol is used as titanium source.

Optionally, the method comprises crystallizing a mixture containing the titanate polyester polyol, silicon source, template and water to obtain the hierarchical porous TS-1 molecular sieve.

Optionally, the crystallization is hydrothermal crystallization.

Optionally, the titanate polyester polyol is at least one of compounds having a chemical formula shown in Formula I:

$$[Ti(RO_x)_{4/x}]_n \qquad \text{Formula I}$$

wherein, $RO_x$ is a group formed by losing H on OH of the organic polyhydric alcohol $R(OH)_x$, and R is a group formed by losing x hydrogen atoms on a hydrocarbon compound, $x \geq 2$; $n = 2\sim30$.

Optionally, x=2, 3 or 4 in Formula I.

Optionally, the titanate polyester polyol has the following molecular formula: $[Ti(RO_x)_{4/x}]_n$; wherein $RO_x$ is a group formed by losing H on OH of the organic polyhydric alcohol $R(OH)_x$, preferably x= 2, 3 or 4 .

Optionally, R in Formula I is a group formed by losing x hydrogen atoms on a hydrocarbon compound.

Optionally, R in Formula I is a group formed by losing x hydrogen atoms of $C_1\sim$ Cs hydrocarbon compound.

Optionally, the titanate polyester polyol is at least one of titanate ethylene glycol polyester, titanate butylene glycol polyester, titanate polyethylene glycol polyester, titanate glycerol polyester and titanate terephthalyl alcohol polyester.

Optionally, the titanate polyethylene glycol polyester is at least one of titanate polyethylene glycol 200 polyester, titanate polyethylene glycol 400 polyester, titanate polyethylene glycol 600 polyester, and titanate polyethylene glycol 800 polyester.

Optionally, the method for preparing the titanate polyester polyol comprises performing transesterification of raw materials containing titanate and polyhydric alcohol to obtain the titanate polyester polyol.

Optionally, the titanate comprises at least one of tetraethyl titanate, tetraisopropyl titanate, tetrabutyl titanate, tetrahexyl titanate and tetraisooctyl titanate.

Optionally, a molar ratio of the titanate to the polyhydric alcohol satisfies:

$$\text{titanate : polyhydric alcohol} = (0.8\sim1.2)n^3/x,$$

wherein x is the number of moles of alkoxyl groups contained in each mole of titanate , and
$n^3$ is the number of moles of hydroxyl groups contained in each mole of polyhydric alcohol.

Optionally, the upper limit of the molar ratio of the titanate to the polyhydric alcohol is $0.85n^3/x$, $0.9n^3/x$, $0.95_n^3/x$, $1n^3/x$, $1.05n^3/x$, $1.1n^3/x$, $1.15n^3/x$ or $1.2n^3/x$, and the lower limit thereof is $0.8n^3/x$, $0.85n^3/x$, $0.9n^3/x$, $0.95n^3/x$, $1n^3/x$, $1,05n^3/x$, $1.1n^3/x$ or $1.15n^3/x$; wherein, x is the number of moles of alkoxy groups contained in each mole of the titanate, and $n^3$ is the number of moles of hydroxyl groups contained in each mole of the polyhydric alcohol.

Optionally, the number of hydroxyl groups in the polyhydric alcohol is not less than two.

Optionally, the polyhydric alcohol comprises at least one of ethylene glycol, diethylene glycol, triethylene glycol, tetraethylene glycol, 1,2-propanediol, 1,3-propanediol, 1,4-butylene glycol, 1,6-hexanediol, polyethylene glycol 200, polyethylene glycol 400, polyethylene glycol 600, polyethylene glycol 800, 1, 4-cyclohexanediol, 1,4-cyclohexane dimethanol, terephthalyl alcohol, glycerin, trimethylolpropane, pentaerythritol, xylitol and sorbitol.

Optionally, the formula of the polyhydric alcohol is $R^2-(OH)_x$ , wherein $x \geq 2$.

Optionally, the molar ratio of the titanate to the polyhydric alcohol satisfies: (0.8~1.2) n/x; wherein, x is the number of moles of alkoxy groups contained in each mole of the titanate, and n is the number of moles of hydroxyl groups contained in each mole of the polyhydric alcohol.

Optionally, the transesterification is carried out in the presence of a transesterification catalyst.

Optionally, the amount of the transesterification catalyst is in a range from 0.1 wt% to 5wt% of the titanate.

Optionally, the upper limit of amount of the transesterification catalyst is 0.2wt%, 0.5wt%, 0.8wt%, 1.0wt%, 1.5wt%, 2.0wt%, 2.5wt%, 3.0wt%, 3.5wt%, 4.0wt%, 4.5wt% or 5.0wt% of the titanate, and the lower limit thereof is 0. 1wt%, 0.2wt%, 0.5wt%, 0.8wt%, 1.0wt%, 1.5wt%, 2.0wt%, 2.5wt%, 3.0wt%, 3.5wt%, 4.0wt% or 4.5wt% of the titanate.

Optionally, the transesterification catalyst is at least one of acidic catalyst and basic catalyst.

**EP 3 862 082 A1**

Optionally, the acid catalyst comprises at least one of alcohol-soluble acid, solid acid, aluminum alkoxide, aluminum phenoxide, tetrabutyl stannate, titanium alkoxide, zirconium alkoxide, ethyl antimonite and butyl antimonite; and the basic catalyst comprises at least one of alcohol-soluble base and solid base.

Optionally, the alcohol-soluble acid is an acid that is easily soluble in alcohol.

Optionally, the alcohol-soluble base is a base that is easily soluble in alcohol.

Optionally, the alcohol-soluble acid comprises sulfuric acid, sulfonic acid and the like.

Optionally, the alcohol-soluble base comprises NaOH, KOH, $NaOCH_3$, organic base and the like.

Optionally, the transesterification catalyst is: a basic catalyst including bases that are easily soluble in alcohol (such as NaOH, KOH, $NaOCH_3$, organic bases and so on) and various solid base catalysts; and acid catalysts including acids that are easily soluble in alcohol (such as sulfuric acid, sulfonic acid and so on) and various solid acid catalysts, aluminum alkoxide, aluminum phenoxide, tetrabutyl stannate, titanium alkoxide, zirconium alkoxide, ethyl antimonite, butyl antimonite and so on; and the amount of the transesterification catalyst is in a range from 0.1 wt% to 5wt% of the titanate.

Optionally, the conditions for the transesterification are: a reaction temperature ranges from 80 to 180 °C, and a reaction time ranges from 2 to 10 hours in an inactive atmosphere.

Optionally, the inactive atmosphere comprises at least one of nitrogen and inert gas atmosphere.

Optionally, the inactive atmosphere is nitrogen atmosphere.

Optionally, the transesterification is carried out under stirring condition.

Optionally, the upper limit of the reaction temperature is 85°C, 90°C, 100°C, 110°C, 120°C, 130°C, 140°C, 150°C, 160°C, 170°C, 175°C or 180°C, and the lower limit thereof is 80°C, 85°C, 90°C, 100°C, 110°C, 120°C, 130°C, 140°C, 150°C, 160°C, 170°C or 175°C.

Optionally, the upper limit of the reaction time is 3 hours, 4 hours, 5 hours, 6 hours, 7 hours, 8 hours, 9 hours or 10 hours, and the lower limit thereof is 2 hours, 3 hours, 4 hours, 5 hours, 6 hours, 7 hours, 8 hours or 9 hours.

Optionally, the conversion rate of the transesterification ranges from 60% to 80%.

Optionally, the conditions for the transesterification further comprise performing vacuum distillation thereafter.

Optionally, the conditions of the vacuum distillation comprise: a vacuum degree ranges from 0.01 to 5kPa, a vacuum distillation temperature ranges from 170 to 230°C, and a vacuum distillation time ranges from 0.5 to 5 hours.

Optionally, in the vacuum distillation process, the upper limit of the vacuum degree is 0.02kPa, 0.05kPa, 0.1kPa, 0.5kPa, 1kPa, 2kPa, 3kPa, 4kPa, 4.5kPa or 5kPa, and the lower limit thereof is 0.01kPa, 0.02kPa, 0.05 kPa, 0.1kPa, 0.5kPa, 1kPa, 2kPa, 3kPa, 4kPa or 4.5kPa.

Optionally, in the vacuum distillation process, the upper limit of the vacuum distillation temperature is 175°C, 180°C, 190°C, 200°C, 210°C, 220°C, 225°C or 230°C, and the lower limit thereof is 170°C, 175°C, 180°C, 190°C, 200°C, 210°C, 220°C or 225°C.

Optionally, in the vacuum distillation process, the upper limit of the vacuum distillation time is 0.8 hour, 1 hour, 2 hours, 3 hours, 4 hours, 4.5 hours or 5 hours, and the lower limit thereof is 0.5 hour, 0.8 hour, 1 hour, 2 hours, 3 hours, 4 hours or 4.5 hours.

Optionally, the conversion rate of the transesterification is greater than 90%.

Optionally, the method comprises following steps:

a) mixing titanate, polyhydric alcohol and transesterification catalyst, and then performing the transesterification under stirring conditions and in an inactive protection atmosphere, wherein the reaction temperature ranges from 80 to 180°C, and the reaction time ranges from 2 to 10 hours; and
b) after the reaction in step a), performing vacuum distillation during which the vacuum degree ranges from 0.01 to 5kPa, the reaction temperature ranges from 170 to 230 °C, and the reaction time ranges from 0.5 to 5 hours.

As a specific embodiment, the method comprises following steps:

1) mixing titanate, polyhydric alcohol and transesterification catalyst uniformly in a three-necked flask, and performing the transesterification under stirring conditions during which a distillation device is connected to the three-necked flask and nitrogen is passed in the three-necked flask for protection, wherein the reaction temperature ranges from 80 to 180 °C, the reaction time ranges from 2 to 10 hours, and the conversion rate of the transesterification ranges from 60% to 80%; and
2) after step 1), connecting the distillation device to the water pump or oil pump for vacuum distillation to make the transesterification more complete, wherein the vacuum degree is controlled to range from 0.01 to 5kPa, the reaction temperature ranges from 170 to 230°C, the reaction time ranges from 0.5 to 5 hours, and the conversion rate of the transesterification is greater than 90%.

Optionally, the molar ratio of the titanate polyester polyol, the silicon source, the template and water satisfies:

titanate polyester polyol: silicon source=0.005 ~0.1;
template: silicon source= 0.01~10;
$H_2O$: silicon source= 5~500;

wherein, the number of moles of the template is based on the number of moles of N atom in the template;
the number of moles of titanate polyester polyol is based on the number of moles of $TiO_2$;
the number of moles of the silicon source is based on the number of moles of $SiO_2$; and
the number of moles of water is based on the number of moles of $H_2O$ itself.

Optionally, the upper limit of the molar ratio of the titanate polyester polyol to the silicon source is 0.008, 0.01, 0.02, 0.03, 0.04, 0.05, 0.06, 0.07, 0.08, 0.09 or 0.1, and the lower limit thereof is 0.005, 0.008, 0.01, 0.02, 0.03, 0.04, 0.05, 0.06, 0.07, 0.08 or 0.09; wherein, the number of moles of the titanate polyester polyol is based on the number of moles of $TiO_2$, and the number of moles of the silicon source is based on the number of moles of $SiO_2$.

Optionally, the upper limit of the molar ratio of the template to the silicon source is 0.02, 0.05, 0.1, 0.2, 0.5, 0.8, 1, 2, 5, 8 or 10, and the lower limit thereof is 0.01, 0.02, 0.05, 0.1, 0.2, 0.5, 0.8, 1, 2, 5 or 8; wherein, the number of moles of the template is based on the number of moles of N atom in the template; and the number of moles of the silicon source is based on the number of moles of $SiO_2$.

Optionally, the upper limit of the molar ratio of the water to the silicon source is 8, 10, 20, 50, 80, 100, 150, 200, 250, 300, 350, 400, 450 or 500, and the lower limit thereof is 5, 8, 10, 20, 50, 80, 100, 150, 200, 250, 300, 350, 400 or 450; wherein the number of moles of water is based on the number of moles of $H_2O$ itself; and the number of moles of the silicon source is based on the number of moles of $SiO_2$.

Optionally, the molar ratio of the titanate polyester polyol, the silicon source, the template and water satisfies:

titanate polyester polyol: silicon source = 0.01 ~0.08;
template: silicon source =0.05~5;
$H_2O$: silicon source =20~400;

wherein, the number of moles of the template is based on the number of moles of N atom in the template;
the number of moles of the titanate polyester polyol is based on the number of moles of $TiO_2$;
the number of moles of the silicon source is based on the number of moles of $SiO_2$; and
the number of moles of water is based on the number of moles of $H_2O$ itself.

Optionally, the silicon source is at least one of silica sol, tetratetraethyl orthosilicate, tetramethoxysilane and white carbon black.

Specifically, the silicon source is one or more of silica sol, tetratetraethyl orthosilicate, tetramethoxysilane and white carbon black.

Optionally, the template refers to at least one of organic base templates.

Optionally, the molar ratio of the titanate polyester polyol, the silicon source, the organic base template and water satisfies:

$TiO_2/SiO_2$= 0.005~0.1;

organic base template/ $(SiO_2+TiO_2$=0.01~10;

$H_2O/SiO_2$= 5~500;

wherein, the silicon content in the silicon source is calculated by the number of moles of $SiO_2$;
the titanium content in the titanate polyester polyol is calculated by the number of moles of $TiO_2$;
the content of the organic base template is calculated by the number of the moles of N atom; and
the number of moles of water is based on the number of moles of $H_2O$ itself.

Optionally, the molar ratio of the titanate polyester polyol, the organic base template, the silicon source and water satisfies:

$TiO_2/SiO_2$= 0.01~0.08;

organic base template/ $SiO_2$= 0.05~5;

$H_2O/SiO_2$= 20~400;

wherein, the silicon content in the silicon source is calculated by the number of moles of $SiO_2$;

the titanium content in the titanate polyester polyol is calculated by the number of moles of $TiO_2$; and
the content of the organic base template is calculated by the number of the moles of N atom.

Optionally, the organic base template comprises A which is at least one of tetraethylammonium hydroxide, tetrapropylammonium hydroxide, tetrabutylammonium hydroxide, triethylpropylammonium hydroxide, tetrapropylammonium halide, tetraethylammonium halide, tetrabutylammonium halide and triethylpropylammonium halide.

Optionally, the organic base template further comprises B which is at least one of aliphatic amine and alcohol amine compounds.

Optionally, B comprises at least one of ethylamine, diethylamine, triethylamine, n-butylamine, butanediamine, hexamethylenediamine, octanediamine, monoethanolamine, diethanolamine, and triethanolamine.

Optionally, the organic base template is at least one of tetraethylammonium hydroxide, tetrapropylammonium hydroxide, tetrabutylammonium hydroxide, triethylpropylammonium hydroxide, tetrapropylammonium halide, tetraethylammonium halide, tetrabutylammonium halide, triethylpropylammonium halide and the like. Alternatively, the organic base template is a mixture of these quaternary ammonium salts or quaternary ammonium bases and aliphatic amine or alcohol amine compounds which is exemplified as ethylamine, diethylamine, triethylamine, n-butylamine, butanediamine, hexamethylene diamine, octanediamine, monoethanolamine, diethanolamine, triethanolamine and the like.

Optionally, the conditions of crystallization are: the crystallization is conducted in sealed condition, a crystallization temperature ranges from 100 to 200°C, and the crystallization time under autogenous pressure does not exceed 30 days.

Optionally, the conditions of crystallization were: the crystallization is conducted in sealed condition, the crystallization temperature ranges from 110 to 180°C, and the crystallization time under autogenous pressure ranges from 1 to 28 days.

Optionally, the conditions of crystallization were: the crystallization is conducted in sealed condition, the crystallization temperature ranges from 120 to 190°C, and the crystallization time under autogenous pressure ranges from 1 to 15 days.

Optionally, the upper limit of the crystallization temperature is 110°C, 120°C, 130°C, 140°C, 150°C, 160°C, 170°C, 180°C, 190°C or 200°C, and the lower limit thereof is 100°C, 110°C, 120°C, 130°C, 140°C, 150°C, 160°C, 170°C, 180°C or 190°C.

Optionally, the upper limit of crystallization time is 1 hour, 5 hours, 10 hours, 15 hours, 20 hours, 1day, 2days, 5days, 10days, 12days, 15days, 20days, 25days, 28 days or 30 days, and the lower limit thereof is 0.5 hour, 1 hour, 5 hours, 10 hours, 15 hours, 20 hours, 1day, 2days, 5days, 10days, 12days, 15days, 20days, 25days, or 28 days.

Optionally, the crystallization is performed dynamically or statically.

Optionally, the mixture is subject to aging or not subject to aging to obtain a gel mixture.

Optionally, the mixture undergoes crystallization after aging, and conditions of aging are that aging temperature is not higher than 120°C for an aging time in a range from 0 to 100 hours.

Optionally, the conditions of aging are the aging temperature ranges from 0 to 120°C for the aging time in a range from 0 to 100 hours.

Optionally, the conditions of aging are the aging temperature ranges from 20 to 80°C for the aging time in a range from 0 to 80 hours.

Optionally, the aging is performed dynamically or statically.

Optionally, after the crystallization is completed, the solid product is separated, washed to be neutral, and dried to obtain the TS-1 molecular sieve.

Optionally, the method for preparing TS-1 molecular sieve comprises:

a) mixing a titanate polyester polyol with a silicon source, an organic base template and water, and keeping the obtained mixture at a temperature not higher than 120°C for aging for a time in a range from 0 to 100 hours to obtain a gel mixture;
b) crystalizing the gel mixture obtained in step a) under sealed conditions to obtain the TS-1 molecular sieve, wherein a crystallization temperature is raised to a range from 100 to 200°C, and a crystallization time ranges from 0 to 30 days under autogenous pressure.

As a specific embodiment, the method for preparing TS-1 molecular sieve comprises:

a') mixing the titanate polyester polyol with the silicon source, the organic base template and water, and keeping the obtained mixture at a temperature not higher than 120 °C for stirring or static aging for a time in a range from 0 to 100 hours to obtain a gel mixture;
b') transferring the gel mixture obtained in step a') into an autoclave which is then sealed, and crystalizing the gel mixture under the condition that the crystallization temperature is raised to a range from 100 to 200°C and a crystallization time ranges from 0 to 30 days under autogenous pressure;

e') after the crystallization is completed, separating the solid product, washing the same with deionized water to be neutral, and drying the same to obtain the hierarchical porous TS-1 molecular sieve.

Optionally, the hierarchical porous TS-1 molecular sieve comprises mesopores, and the pore diameter thereof ranges from 2 to 10 nm.

Optionally, the particle size of the hierarchical porous titanium-silicon TS-1 molecular sieve ranges from 100 to 500 nm.

Optionally, the hierarchical porous titanium-silicon TS-1 molecular sieve has a mesoporous structure with a narrower pore size distribution and less non-framework titanium.

Optionally, the TS-1 molecular sieve is used for the selective oxidation reaction of organic substances in the presence of $H_2O_2$.

Compared with the conventional preparation process, titanium is connected to a polymer, which makes titanium more difficult to hydrolyze, prevent the $TiO_2$ precipitation and facilitate the entry of titanium into the molecular sieve framework. In addition that such new type of titanate polyester polyol acts as the titanium source during the synthesis process, the titanate polyester polyol can also be used as mesoporous template. The TS-1 molecular sieve obtained by this method has mesoporous structure and has less non-framework titanium.

In the present application, "$C_1\sim C_8$" and the like all refer to the number of carbon atoms contained in a group.

The beneficial effects that the present application can achieve comprise followings:

1) The present application uses the titanate polyester polyol as the titanium source. Titanium is connected to the polymer, making titanium more difficult to hydrolyze, preventing the $TiO_2$ precipitation and reducing the formation of non-framework titanium;

2) In the method of the present application, the titanate polyester polyol not only is used as titanium source, but also can be used as a mesoporous template. The obtained TS-1 molecular sieve has mesoporous structure and has less non-framework titanium.

## BRIEF DESCRIPTION OF FIGURES

Figure 1 shows XRD pattern of the product prepared according to Example 1 of the present invention.

Figure 2 shows SEM image of the product prepared according to Example 1 of the present invention.

Figure 3 shows ultraviolet-visible (UV-VIS) spectrum of the product prepared according to Example 1 of the present invention.

Figure 4 shows the results of physical adsorption and pore size distribution of the product prepared according to Example 1 of the present invention.

## DETAILED DESCRIPTION

The present application will be described in detail below with reference to the examples, but the present application is not limited to these examples.

Unless otherwise specified, the raw materials in the examples of the present application are all commercially available.

In the present application, the X-Ray Diffraction Analysis (XRD) of the product is performed by the X'Pert PRO X-Ray Diffractometer from PANalytical Company, wherein the XRD is performed under conditions of the Cu target K$\alpha$ radiation source ($\lambda$=0.15418 nm), electric voltage =40 KV, and electric current=40 mA.

In the present application, the SEM image of the product is obtained by Hitachi TM3000 SEM.

In the present application, the ultraviolet-visible diffuse reflectance spectrum of the product is measured on a Varian Cary500 Scan UV-Vis spectrophotometer equipped with an integrating sphere.

In the present application, the physical adsorption, external specific surface area and pore size distribution analysis of the product are performed by the ASAP2020 automatic physics instrument from Mike.

In the present application, the titanate polyester polyol is used as titanium source, and an organic base template, a silicon source and deionized water are added therein to synthesize hierarchical porous TS-1 molecular sieve under hydrothermal conditions.

According to an embodiment of the present application, the method for preparing the hierarchical porous TS-1 molecular sieve is as follows:

a) mixing the titanate polyester polyol, the organic base template, the silicon source and water in a certain proportion to obtain a gel mixture, wherein, preferably, the gel mixture has the following molar ratio:

$TiO_2/SiO_2$= 0.005~0.1;

organic base template/$SiO_2$ = 0.01~10;

$H_2O/SiO_2$= 5~500;

wherein the silicon content in the silicon source is calculated by the number of moles of $SiO_2$, the titanium content in the titanate polyester polyol is calculated by the number of moles of $TiO_2$, and the content of the organic base template is calculated by the number of the moles of N atom;

b) subjecting the gel mixture obtained in step a) to an aging process, which can be omitted or can be carried out, wherein the aging can be carried out under stirring or static conditions, an aging temperature ranges from 0 to 120°C, and an aging time ranges from 0 to 100 hours;

c) transferring the gel mixture after step b) into an autoclave which is then sealed, and crystalizing the gel mixture under the condition that the crystallization temperature is raised to a range from 100 to 200°C, and a crystallization time ranges from 1 to 30 days; and

d) after the crystallization is completed, separating the solid product, washing the same with deionized water to be neutral, and drying the same to obtain the hierarchical porous TS-1 molecular sieve.

Preferably, the organic base template in step a) is at least one of tetraethylammonium hydroxide, tetrapropylammonium hydroxide, tetrabutylammonium hydroxide, triethylpropylammonium hydroxide, tetrapropylammonium halide, tetraethylammonium halide, tetrabutylammonium halide, triethylpropylammonium halide and the like; alternatively, the organic base template is a mixture of these quaternary ammonium salts or quaternary ammonium bases and aliphatic amine or alcohol amine compounds which is exemplified as ethylamine, n-butylamine, butanediamine, hexamethylene diamine, octanediamine, monoethanolamine, diethanolamine, triethanolamine and the like.

Preferably, $TiO_2/SiO_2$=0.01~8 in the gel mixture in step a).

Preferably, organic base template /$SiO_2$=0.05~5 in the gel mixture in step a).

Preferably, $H_2O/SiO_2$ =20~400 in the gel mixture in step a).

Preferably, the aging process in step b) can be omitted or can be carried out, wherein an aging temperature ranges from 20 to 80°C, and an aging time ranges from 0 to 80 hours.

Preferably, in step c), the crystallization temperature ranges from 120 to 190°C, and the crystallization time ranges from 1 to 15 days.

Preferably, the crystallization process in step c) is performed statically or dynamically.

Preferably, the hierarchical porous TS-1 molecular sieve is obtained in the step d).

## Example 1

The specific raw materials, amounts thereof, crystallization temperature and time, XRD crystal form and external specific surface area are shown in Table 1 below.

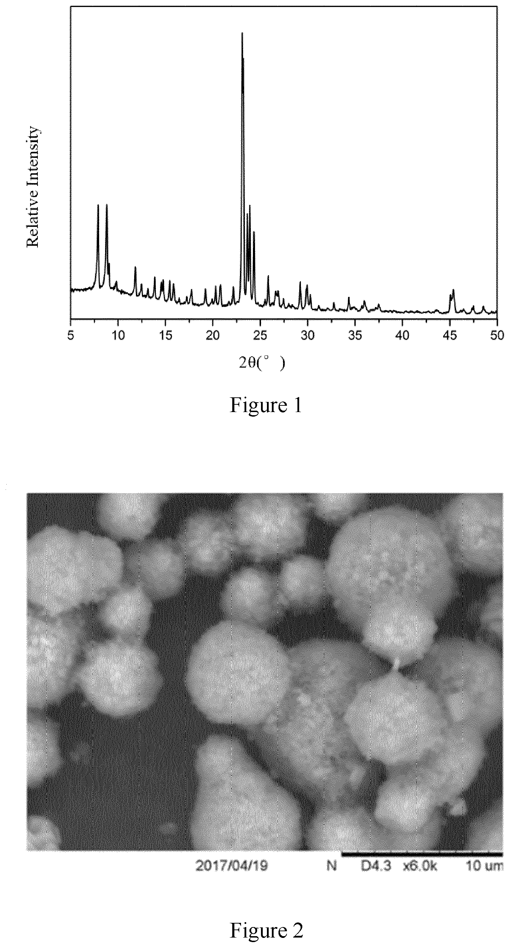

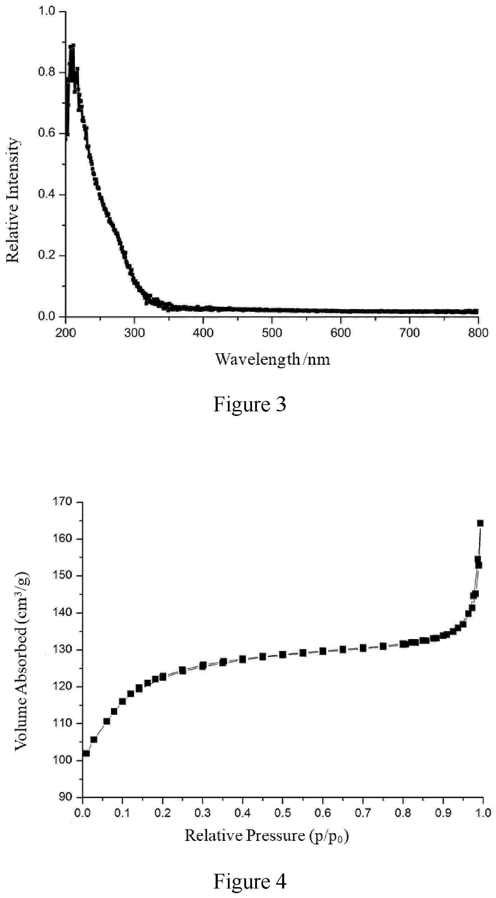

In Example 1, the specific process is as follows: 6.76g tetrapropylammonium hydroxide (25wt%) aqueous solution, 1g white carbon black, 10g water are added to 0.14g titanate ethylene glycol polyester, which are mixed uniformly, and stirred at room temperature for 2 hours. Then, the obtained mixture is transferred to a stainless steel autoclave, wherein the molar ratio of all components herein is 0.05[Ti(OCH_2CH_2O)_2]_{20}: SiO_2: 0.5TPAOH: 50H_2O. The autoclave is sealed and placed in an oven that has been raised to a constant temperature of 170°C, and crystallization step under autogenous pressure is performed for 2 days. After crystallization is completed, the solid product is separated by centrifugation, washed with deionized water to be neutral, and dried in air at 110°C to obtain a hierarchical porous TS-1 molecular sieve. The obtained hierarchical porous TS-1 molecular sieve is subject to XRD analysis, the result of which is shown in Figure 1. As can be seen from Figure 1, the obtained sample is proved to be TS-1 molecular sieve. The SEM image of the obtained hierarchical porous TS-1 molecular sieve is shown in Figure 2. As can be seen from Figure 2, the hierarchical porous TS-1 molecular sieve has the morphology of stacked small crystal grains. The UV-VIS diffuse reflectance spectrum of the obtained hierarchical porous TS-1 molecular sieve is shown in Figure 3. As can be seen from Figure 3, almost no non-framework titanium exists in the obtained hierarchical porous TS-1 molecular sieve. The physical adsorption curve of the obtained hierarchical porous TS-1 molecular sieve is shown in Figure 4.

The method for preparing the titanate ethylene glycol polyester is as follows: 5g ethylene glycol and 9.2g tetraethyl orthosilicate are added into a three-necked flask which is connected to a distillation device. 0.12g concentrated sulfuric acid (98wt%) as transesterification catalyst is added dropwise in the three-necked flask under stirring condition. The temperature is heated up to 175°C under nitrogen protection, and the reaction time is 5 hours. During this process, a large amount of ethanol are distilled out, and the conversion rate of the transesterification is 89%. Then a vacuum device is connected to distillation device and the transesterification continues under vacuum distillation conditions, wherein the vacuum degree of the reaction system was controlled to be 0.1kPa and the temperature was raised to 210°C. After reacting for 3 hours, the transesterification is stopped. After the temperature is naturally cooled to be room temperature, the resulting sample is taken, and the conversion rate of the transesterification is 95%.

The conversion rate of the transesterification in the Examples of the present application is calculated as follows.

According to the number of moles n of the by-product alcohols distilled out during the reaction, the number of groups participating in the transesterification is determined to be n, and the total number of moles of esters in the reaction raw materials is m, and then the conversion rate of the transesterification is n/xm; wherein x depends on the number of alkoxy groups connected to the central atom in the esters.

The prepared sample is subject to thermogravimetric test which is conducted by TA Q-600 thermogravimetric analyzer from TA Instruments. During the thermogravimetric test, the nitrogen flow rate is 100ml/min, and the temperature is increased to 700°C at a temperature rise rate of 10°C/min. According to the reaction conversion rate x, the degree of polymerization n of the product can be determined: $n=1/(1-x)$. The chemical formula of the obtained sample is $[Ti(OCH_2CH_2O)_2]_{20}$.

## Examples 2 to 13

The specific raw materials, amounts thereof and reaction conditions different from Example 1 and corresponding analysis results are shown in Table 1 below, and the other procedures are the same as those in Example 1.

**Table 1 Raw materials, amounts thereof and crystallization conditions of Examples 2 to 13**

| Example Numbering | Titanate polyester polyol (mol) | Silicon source (mol) | Organic base compound (mol) | water (mol) | Crystallization temperature (°C) | Crystallization time (day) | XRD crystal form | External specific surface area |
|---|---|---|---|---|---|---|---|---|
| 2 | $[Ti(RO_x)_{4/x}]_n$; R is a group formed by losing two hydrogen atoms on the hydroxyl groups of ethylene glycol, x=2, n=12 0.005mol | White carbon black 1mol | Tetrapropylammonium hydroxide 0.5 mol | 50 mol | 170 | 4 | TS-1 | 185 |
| 3 | $[Ti(RO_x)_{4/x}]_n$; R is a group formed by losing two hydrogen atoms on the hydroxyl groups of 1,3-propanediol, x=2, n=11 0.01mol | White carbon black 1mol | Tetrapropylammonium hydroxide 0.5 mol | 50 mol | 170 | 4 | TS-1 | 145 |
| 4 | $[Ti(RO_x)_{4/x}]_n$; R is a group formed by losing three hydrogen atoms on the hydroxyl groups of glycerol, x=3, n=10 0.006mol | 1mol Silica sol | Tetrapropylammonium hydroxide 1 mol | 50 mol | 150 | 7 | TS-1 | 162 |
| 5 | $[Ti(RO_x)_{4/x}]_n$; R is a group formed by losing two hydrogen atoms on the hydroxyl groups of 1,4-butanediol, x=2, n=12 0.02mol | Silica sol 1mol | Tetrapropylammonium hydroxide 0.05 mol | 10 mol | 170 | 4 | TS-1 | 130 |
| 6 | $[Ti(RO_x)_{4/x}]_n$; R is a group formed by losing two hydrogen atoms on the hydroxyl groups of 1,6-hexanediol, x=2, n=15 0.03mol | Tetraethyl orthosilicate 1mol | Tetrapropylammonium hydroxide 10 mol | 300 mol | 170 | 1 | TS-1 | 235 |
| 7 | $[Ti(RO_x)_{4/x}]_n$; R is the group formed by losing two hydrogen atoms on the hydroxyl groups of terephthalyl alcohol, x=2, n=10 0.03mol | Tetraethyl orthosilicate 1mol | Tetrapropylammonium hydroxide 0.5 mol | 50 mol | 100 | 20 | TS-1 | 165 |
| 8 | $[Ti(RO_x)_{4/x}]_n$, R is a group formed by losing two hydrogen atoms on the hydroxyl groups of 1,4-cyclohexanediol, x=2, n=11 0.008mol | White carbon black 1mol | Tetrapropylammonium hydroxide 0.5 mol | 50 mol | 200 | 1 | TS-1 | 210 |

(continued)

| Example Numbering | Titanate polyester polyol (mol) | Silicon source (mol) | Organic base compound (mol) | water (mol) | Crystallization temperature (°C) | Crystallization time (day) | XRD crystal form | External specific surface area |
|---|---|---|---|---|---|---|---|---|
| 9 | $[Ti(RO_x)_{4/x}]_n$; R is the group formed by losing two hydrogen atoms on the hydroxyl groups of 1,4-cyclohexanedimethanol, x=2, n=16 0.05mol | White carbon black 1mol | Tetrapropylammonium hydroxide 0.1 mol+5mol n-butylamine | 50 mol | 170 | 7 | TS-1 | 180 |
| 10 | $[Ti(RO_x)_{4/x}]_n$; R is a group formed by losing two hydrogen atoms on the hydroxyl groups of polyethylene glycol 200, x=2, n=12 0.07mol | Silica sol 1mol | Tetrapropylammonium bromide 0.5 mol+10mol n-butylamine | 50 mol | 170 | 7 | TS-1 | 175 |
| 11 | $[Ti(RO_x)_{4/x}]_n$; R is a group formed by losing two hydrogen atoms on the hydroxyl groups of polyethylene glycol 400, x=2, n=15 0.035mol | Silica sol 1mol | Tetrabutylammonium hydroxide 1 mol+0.1 mol tetrapropylammonium bromide | 150 mol | 170 | 0.5 | TS-1 | 150 |
| 12 | $[Ti(RO_x)_{4/x}]_n$; R is a group formed by losing two hydrogen atoms on the hydroxyl groups of polyethylene glycol 800, x=2, n=12 0.045mol | Tetraethyl orthosilicate 1mol | Tetraethylammonium hydroxide 0.5 mol+0.5 mol tetrapropylammonium bromide | 50 mol | 170 | 3 | TS-1 | 166 |
| 13 | $[Ti(RO_x)_{4/x}]_n$; R is a group formed by losing four hydrogen atoms on the hydroxyl groups of pentaerythritol, x=4, n=16 0.1mol | Tetraethyl orthosilicate 1mol | Hexanediamine 10 mol+0.1 mol tetrapropylammonium bromide | 50 mol | 175 | 10 | TS-1 | 140 |

In Table 1, R is a group formed by losing $x$ hydrogen atoms from hydrocarbon compounds, which is such as ethyl, propyl, butyl, a group formed by losing $x$ hydrogen atoms from polyethylene glycol, or a group formed by losing $x$ hydrogen atoms from para-xylene, $x$ is in a range from 2 to 6. The crystallization in Examples 1 to 13 is static crystallization.

The method for preparing the titanate polyester polyol in Examples 2 to 13 is the same as the method for preparing the titanate ethylene glycol polyester in Example 1. The difference is that 5g ethylene glycol in Example 1 is replaced with 6.1g 1,3-propanediol, 5g glycerol, 7.2g 1,4-butanediol, 9.5g 1,6-hexanediol, 11.1g terephthalyl alcohol, 9.3g 1,4-cyclohexanediol, 11.5g 1,4-cyclohexane dimethanol, 16.8g polyethylene glycol 200, 33.8g polyethylene glycol 400, 65.6 g polyethylene glycol 800, 5.5g pentaerythritol, respectively, to obtain the corresponding titanate polyester polyol in Examples 2 to 13.

**Example 14**

Except that the crystallization temperature is 100°C and the crystallization time is 30 days, the other procedures are the same as those in Example 1.

The crystallization is dynamic, which is performed by using a rotating oven. The crystallization temperature and crystallization time are the same as those in Example 1, and the rotation speed of the rotating oven is 35 rpm.

**Example 15**

Aging step is performed before crystallization, and the aging step is performed statically at 120°C for 2 hours. The other procedures are the same as those in Example 1.

**Example 16**

Aging step is performed before crystallization, and the aging step is performed at 20°C for 80 hours. The other procedures are the same as those in Example 1.

**Example 17 Phase Structure Analysis**

The samples prepared in Example 1 to Example 16 are subjected to XRD phase structure analysis respectively, results of which are typically shown in Figure 1. Figure 1 shows the XRD pattern of the sample prepared in Example 1. As can be seen from Figure 1, the sample in Example 1 is proved to be TS-1 molecular sieve.

The test results of other samples are only slightly different from the samples in Example 1 in terms of the intensity of the diffraction peaks, and they are all proved to be TS-1 molecular sieves.

**Example 18 Morphology Test**

The samples prepared in Example 1 to Example 16 are subjected to SEM morphology analysis respectively, results of which are typically shown in Figure 2. Figure 2 shows the SEM image of the sample prepared in Example 1. As can be seen from Figure 2, the sample prepared in Example 1 has the morphology of stacked small crystal grains and the particle size of the sample in Example 1 is about 100 nm.

The test results of other samples are similar to the test result of the sample in Example 1, and the particle size of the samples ranges from 100 to 500 nm.

**Example 19 Spectrum Analysis**

The samples prepared in Example 1 to Example 16 were subjected to UV-VIS diffuse reflectance spectrum analysis respectively, results of which are typically shown in Figure 3. Figure 3 shows UV-VIS diffuse reflectance spectrum of the sample prepared in Example 1. As can be seen from Figure 3, the sample of Example 1 almost has no non-framework titanium.

The test results of other samples are similar to those of the sample in Example 1, and there is almost no non-framework titanium in the sample.

**Example 20 Physical Adsorption Analysis**

The samples prepared in Example 1 to Example 16 are subjected to physical adsorption and pore size distribution analysis respectively, results of which are typically shown in Figure 4. Figure 4 shows the results of physical adsorption of the sample prepared in Example 1. As can be seen from Figure 4, the sample has typical hierarchical porous structure, and is a complex material with mesoporous and microporous structure.

Pore size distribution analysis shows that the samples prepared in Example 1 to Example 16 have mesopores of which the pore sizes range from 2 to 10 nm.

The test results of other samples are similar to the test result of sample in Example 1, and any of other samples all has typical hierarchical porous structure, and is a complex material with mesoporous and microporous structures.

The above examples are only illustrative, and do not limit the present application in any form. Any change or modification, made by the skilled in the art based on the technical content disclosed above, without departing from the spirit of the present application, is equivalent example and falls within the scope of the present application.

**Claims**

1. A method for preparing hierarchical porous titanium-silicon TS-1 molecular sieve comprising using a titanate polyester polyol as titanium source.

2. The method according to claim 1 comprising performing crystallization of a mixture containing the titanate polyester polyol, a silicon source, a template and water to obtain the hierarchical porous TS-1 molecular sieve, wherein the crystallization is hydrothermal crystallization.

3. The method according to claim 1, wherein the titanate polyester polyol is at least one of compounds having a chemical formula shown in Formula I:

$$[Ti\,(RO_x)_{4/x}]_n \qquad \text{Formula I}$$

wherein, $RO_x$ is a group formed by losing H on OH of the organic polyhydric alcohol $R(OH)_x$, and R is a group formed by losing x hydrogen atoms on a hydrocarbon compound, $x \geq 2$; $n = 2 \sim 30$.

4. The method according to claim 3, wherein $x = 2$, 3 or 4 in Formula I.

5. The method according to claim 3, wherein the titanate polyester polyol is at least one of titanate ethylene glycol polyester, titanate butylene glycol polyester, titanate polyethylene glycol polyester, titanate glycerol polyester and titanate terephthalyl alcohol polyester.

6. The method according to claim 2, wherein a molar ratio of the titanate polyester polyol, the silicon source, the template and water satisfies:

   titanate polyester polyol: silicon source=0.005~0.1;
   template: silicon source= 0.01~10;
   $H_2O$: silicon source=5~500;

   wherein, the number of moles of the template is based on the number of moles of N atom in the template;
   the number of moles of titanate polyester polyol is based on the number of moles of $TiO_2$;
   the number of moles of the silicon source is based on the number of moles of $SiO_2$; and
   the number of moles of water is based on the number of moles of $H_2O$ itself.

7. The method according to claim 6, wherein the molar ratio of the titanate polyester polyol, the silicon source, the template and water satisfies:

   titanate polyester polyol: silicon source = 0.01 ~0.08;
   template: silicon source =0.05~5;
   $H_2O$: silicon source=20~400;

   wherein, the number of moles of the template is based on the number of moles of N atom in the template;
   the number of moles of the titanate polyester polyol is based on the number of moles of $TiO_2$;
   the number of moles of the silicon source is based on the number of moles of $SiO_2$; and
   the number of moles of water is based on the number of moles of $H_2O$ itself.

8. The method according to claim 2, wherein the silicon source is at least one of silica sol, tetratetraethyl orthosilicate, tetramethoxysilane and white carbon black.

9. The method according to claim 2, wherein the template refers to at least one of organic base templates.

10. The method according to claim 9, wherein the organic base template comprises A which is at least one of tetraethylammonium hydroxide, tetrapropylammonium hydroxide, tetrabutylammonium hydroxide, triethylpropylammonium hydroxide, tetrapropylammonium halide, tetraethylammonium halide, tetrabutylammonium halide and triethylpropylammonium halide.

11. The method according to claim 10, wherein the organic base template further comprises B which is at least one of aliphatic amine and alcohol amine compounds.

12. The method according to claim 11, wherein B comprises at least one of ethylamine, diethylamine, triethylamine, n-butylamine, butanediamine, hexamethylenediamine, octanediamine, monoethanolamine, diethanolamine, and triethanolamine.

13. The method according to claim 2, wherein conditions of crystallization are:

    the crystallization is conducted in sealed condition, a crystallization temperature ranges from 100 to 200°C, and a crystallization time under autogenous pressure does not exceed 30 days.

14. The method according to claim 13, wherein conditions of crystallization are:

    the crystallization is conducted in sealed condition, a crystallization temperature ranges from 120 to 190°C, and a crystallization time under autogenous pressure ranges from 1 to 15 days.

15. The method according to claim 2, wherein the mixture undergoes crystallization after aging, and conditions of aging are that aging temperature is not higher than 120°C for an aging time in a range from 0 to 100 hours.

16. The method according to claim 1 comprising following steps:

    a) mixing the titanate polyester polyol with an organic base template and water, and keeping the obtained mixture at a temperature not higher than 120 °C for aging for a time in a range from 0 to 100 hours to obtain a gel mixture;
    b) crystalizing the gel mixture obtained in step a) under sealed conditions to obtain the hierarchical porous titanium-silicon TS-1 molecular sieve, wherein the crystallization temperature is raised to a range from 100 to 200°C, a crystallization time does not exceed 30 days under autogenous pressure.

17. The method according to claim 1, wherein the TS-1 molecular sieve comprises mesopores, and the pore diameter thereof ranges from 2 to 10 nm.

18. The method according to claim 1, wherein a particle size of the hierarchical porous titanium-silicon TS-1 molecular sieve ranges from 100 to 500 nm.

19. Use of the hierarchical porous titanium-silicon TS-1 molecular sieve prepared by the method according to any one of claims 1 to 18 in the selective oxidation reaction of organic substances in the presence of $H_2O_2$.

Figure 1

Figure 2

Figure 3

Figure 4

## INTERNATIONAL SEARCH REPORT

| | International application No. |
|---|---|
| | **PCT/CN2018/115720** |

**A. CLASSIFICATION OF SUBJECT MATTER**

B01J 29/89(2006.01)i; C01B 39/08(2006.01)i

According to International Patent Classification (IPC) or to both national classification and IPC

**B. FIELDS SEARCHED**

Minimum documentation searched (classification system followed by classification symbols)

B01J; C01B

Documentation searched other than minimum documentation to the extent that such documents are included in the fields searched

Electronic data base consulted during the international search (name of data base and, where practicable, search terms used)

CNABS; VEN; CNTXT; STN; 百度学术; BAIDU SCHOLAR; CNKI; REGISTRY; CAPLUS: 袁丹华, 邢嘉成, 徐云鹏, 刘中民, 大连化学物理研究所, 聚酯, 钛酸?二醇聚酯, 乙二醇钛, 钛硅分子筛, 钛酸, 钛硅, 分子筛, 酯交换, 沸石, 钛硅沸石, 聚钛酸, +copolymer+, sieve?, +pore+, +titan+, polymeric titanium, polytitan+, titanium glycolate?, zeolite?, poly+ titan+ glycolate?, TS, +titan+ copolymer, TS-1, titanium source?, glycol, +titan+sili+, titanium glycolate, high titanium, titanium-rich, titanium diolates, titanosilicate, 310-92-9, 46145-23-7

**C. DOCUMENTS CONSIDERED TO BE RELEVANT**

| Category* | Citation of document, with indication, where appropriate, of the relevant passages | Relevant to claim No. |
|---|---|---|
| X | N.Phonthammachai et al. "Crystallization and catalytic activity of high titanium loaded TS-1 zeolite" <br> *Materials Chemistry and Physics,* Vol. 97, No. 2, 3, 26 September 2005 (2005-09-26), ISSN: 0254-0584, <br> p. 458, left column, paragraph 1, p. 459, left column, paragraph 2 to right column, paragraph 3, and figure 5a | 1-19 |
| A | LAHCEN, S. et al. "1, 2-Diolates of titanium as suitable precursors for the preparation of photoactive high surface titania" <br> *Applied Catalysis B: Environmental,* Vol. 21, No. 4, 21 June 1999 (1999-06-21), ISSN: 0926-3373, <br> pp. 270 and 271, section 2.1 | 1-19 |
| A | US 2920089 A (THE KENDALL CO.) 05 January 1960 (1960-01-05) <br> entire document | 1-19 |

☑ Further documents are listed in the continuation of Box C.     ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **05 August 2019** | **15 August 2019** |

| Name and mailing address of the ISA/CN | Authorized officer |
|---|---|
| **National Intellectual Property Administration, PRC (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2018/115720** |

### C. DOCUMENTS CONSIDERED TO BE RELEVANT

| Category* | Citation of document, with indication, where appropriate, of the relevant passages | Relevant to claim No. |
| --- | --- | --- |
| A | 沈国良等 (SHEN, Guoliang et al.). "金属乙二醇盐合成工艺的研究 (Study on Synthesis Technology of Ethylene Glycol Alkoxides)" <br> 化学世界 (Chemical World), Vol. 52, No. 1, 22 May 2011 (2011-05-22), <br> ISSN: 0367-6358, <br> p. 50, section 2, pp. 51 and 52, and section 4 | 1-19 |
| A | DAN, Wang et al. "Hydrothermal Synthesis and Characterization of a Novel One-Dimensional Titanium Glycolate Complex Single Crystal: Ti(OCH2CH2O)2" <br> Chemistry of Materials, Vol. 11, No. 8, 10 July 1999 (1999-07-10), <br> ISSN: 0897-4756, <br> abstract, figures 1-3, p. 2008, right column, paragraph 3 to p. 2010, right column, second-to-last paragraph | 1-19 |

Form PCT/ISA/210 (second sheet) (January 2015)

**INTERNATIONAL SEARCH REPORT**
Information on patent family members

| International application No. |
| --- |
| **PCT/CN2018/115720** |

| Patent document cited in search report | Publication date (day/month/year) | Patent family member(s) | Publication date (day/month/year) |
| --- | --- | --- | --- |
| US        2920089        A | 05 January 1960 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4410501 A, Taramasso
- CN 103357432 A, Zhou Xinggui
- CN 102910643 A, Zhang Shufen
- CN 104058423 A, Chen Lihua
- CN 101962195 A, Li Gang

**Non-patent literature cited in the description**

- **THANGARAJ et al.** *zeolite,* 1992, vol. 12, 943